# EUROPÄISCHE PATENTSCHRIFT

(11) **EP 1 068 824 B1**
(45) Veröffentlichungstag und Bekanntmachung des Hinweises auf die Patenterteilung: **04.12.2002**
(21) Anmeldenummer: 99810626.4
(22) Anmeldetag: 13.07.1999
(51) Int. Cl.: A47J 31/44

(54) **Getränkeausschangerät mit Auslaufleitung**
Beverage brewing device with an outflow tube
Machine pour préparer des boissons avec un tuyau d'évacuation

(43) Veröffentlichungstag der Anmeldung: 17.01.2001
(73) Patentinhaber: Aequator Ag, 9320 Arbon (CH)
(72) Erfinder: Meyer, Manfred, 9320 Arbon (CH)
(74) Vertreter: Hepp, Dieter

(56) Entgegenhaltungen:
- EP-A- 0 467 666
- EP-A- 0 472 272
- US-A- 4 715 274
- US-A- 5 335 588
- US-A- 5 628 239

## Beschreibung

Gegenstand der Erfindung ist ein Getränkeaussckankgerät mit Auslaufleitung und ein diesbezügliches Verfahren zur Entlüftung der Auslaufleitung gemäss den Merkmalen der unabhängigen Hauptansprüche.

In vielen Getränkeautomaten wird das auszuschenkende Getränk frisch zubereitet, sei es durch Verdünnen von Konzentraten, Auflösen von Pulvern oder Extraktion unlöslicher Granulate wie z.B. von Kaffeepulver. In allen diesen Fällen ist es notwendig, das frisch zubereitete Getränk vom Zubereitungsort im Automat über Leitungen in das der Ausgabe dienende Behältnis, eine Tasse oder einen Becher, zu leiten. Aus lebensmittelhygienischen Gründen und aus Gründen der Produktqualität ist es unerwünscht, dass in den Leitungen Flüssigkeit nach der Ausgabe eines Getränks verbleibt. Insbesondere die von der Zubereitungskammer zum Ausgabeort führende Auslaufleitung, durch die Getränke verschiedener Geschmacksrichtungen ausgegeben werden und die diese Getränke in nicht mehr lagerstabiler Form, z.B. als verderbliche, zuckerhaltige Lösung aufnimmt, müssen vollständig entleert werden. Zudem sollte die Entleerung im Zuge der eigentlichen Getränkeausgabe ablaufen, bei der das Getränk meist unter Druck in das Ausgabegefäss befördert wird. Dieses Erfordernis macht eine zeitverzögert arbeitende Ventilsteuerung zur Entlüftung der Ausgabeleitung wenig geeignet. Zudem sind Ventilsteuerungen aufgrund der bewegten Teile teuer und eine Quelle möglicher Defekte. Von Getränkeautomaten wird jedoch ein Höchstmass an Zuverlässigkeit im Dauerbetrieb, verbunden mit einfachster, preiswerter Konstruktion erwartet. Ein Rückschlagventil z.B. mit einer Kugel hat den Nachteil, dass die Kugel erst mit dem Flüssigkeitsdruck schliesst. Es tritt unerwünscht Flüssigkeit aus. Das kann leicht, je nach Art der Getränkeflüssigkeit, zum Verkleben und damit zur Fehlfunktion des Kugelventils führen. Zudem benötigt ein derartiges Ventil einen Mindestdruck, der oft nicht zur Verfügung steht, was ebenfalls zu Fehlfunktionen führt. Lippenventile öffnen sich nicht leicht genug, um die Getränkeleitung zu entlüften. Gesteuerte Ventile sind aufwendig und teuer.

Ausser Ventilen sind aus dem freien Stand der Technik zum Belüften von auch einfache T-Leitungsstücke bekannt. T-Stücke haben aber den Nachteil, dass sie schon bei geringem Flüssigkeits-Druck ein hochreichendes Entlüftungsteil brauchen, um Flüssigkeitsaustritt an der Stelle der Entlüftung zu verhindern. Schon bei 0,1 bar Auslaufdruck müsste das Entlüftungsrohr 1 Meter über den Auslaufpunkt hinausragen, was konstruktiv nicht möglich ist.

Die Patentschrift 5 628 239 beschreibt die Anordnung einer Belüftungsöffnung vor einer Mischkammer für die Zubereitung eine Milch-Schaum-Gemisches (vgl Oberbegriff des Anspruchs 1).

EP 0 472 272 zeigt ebenfalls die Anordnung einer Belüftungsöffnung vor einer Zubereitungskammer für ein zuzubereitendes Getränk.

Die bekannten Lösungen sind also unbefriedigend.

Aufgabe der vorliegenden Erfindung ist es, die Nachteile des Bekannten zu vermeiden und durch ein einfaches Bauteil ohne bewegte Teile die Entlüftung der Auslaufleitung von Getränkeausschankgeräten zu bewirken, ohne dass Flüssigkeit durch die Belüftungsöffnung austritt.

Erfindungsgemäss wird diese Aufgabe gemäss den kennzeichnenden Merkmalen der Ansprüche 1, 3 und 5 gelöst. Ein mit Öffnungen versehener Injektor ist Bestandteil der Ausschankleitung, und zwar in Fliessrichtung betrachtet in einem ersten Drittel der Ausschankleitung, vorzugsweise am Anfang der Ausschankleitung. Als Ausschankleitung im Sinne dieser Erfindung wird in einem Ausschankgerät für Getränke der Leitungsabschnitt betrachtet, der das Getränk von der Zubereitungseinheit, hier als Mischkammer bezeichnet, zwecks Ausgabe in ein Ausschankgefäss leitet. Eine solche Auslaufleitung ist durch die Funktion definiert; sie muss nicht aus einem einzigen Stück oder aus dem gleichem Material gefertigt sein. Es kann sich um Metall, Kunstoff oder andere herkömmlich verwandte Materialien handeln. Ein Teil der Auslaufleitung im Sinne dieser Erfindung ist auch jeder Leitungsabschnitt, welcher der Ableitung der Flüssigkeit aus der Zubereitungseinheit dient und z.B. Bestandteil dieses Bauteils ist. Das kann z.B. ein Metallstutzen sein, an den nachfolgend eine Kunstoffleitung angeschlossen ist.

Ein Injektor im Sinne der vorliegenden Erfindung ist ein Rohr oder ein Leitungabschnitt, der eine Verengung des Leitungsquerschnitts und mindestens eine Belüftungsöffnung im Bereich der Verengung aufweist. Ein solcher Injektor funktioniert nach dem bekanntem Prinzip der Venturi-Düse. Die Beschleunigung der Flüssigkeit beim Durchströmen des verengten Leitungsabschnitts bewirkt beim abrupten Übergang in einen nachfolgenden Leitungsabschnitt mit erweitertem Querschnitt einen vektoriellen Transport der Flüssigkeit. Die Expansion beim Austritt aus dem verengten Leitungsquerschnitt erzeugt bei geeigneter technischer Auslegung tendenziell einen Unterdruck im Vergleich zur Umgebung, nie jedoch einen Überdruck. Dadurch kann aus den Belüftungsöffnungen, die eine Verbindung zwischen dem der Verengung nachfolgenden Leitungsabschnitt und der Umgebung herstellen, keine Flüssigkeit austreten. Der beim Transport einer Flüssigkeit in einer Leitung oder Rohr im Vergleich zum Atmosphärendruck herrschende höhere statische Druck wird durch den Injektor im Bereich des Belüftungslochs auf einen Druck kleiner oder höchstens gleich dem Atmosphärendruck gesenkt.

Ein derartiges Bauteil ist einfach herzustellen, über Anschlussmittel einfach in eine bestehende Ausschankleitung einfügbar und wartungsfrei, da keinerlei bewegliche Teile vorhanden sind. Es ist auch denkbar, einen Injektor nicht als separates Bauteil, sondern im Zuge der Fertigung der Ausschankleitung, z.B. beim Spritzguss aus Kunststoff, als Bestandteil der Ausschankleitung herzustellen. Ein Injektor im Sinne dieser Erfindung kann auch als Verbindungsmittel zwischen Mischkammer und Ausschankleitung dienen; er kann z.B. an seinen beiden Öffnungen mit unterschiedlichen Anschlussmitteln ausgestattet ein, wie einem Schraubgewinde oder einem Wulst zum Anschluss eines flexiblen Schlauches. Der flüssigkeitsdurchströmte Innenkanal eines solchen Injektors wird genau wie die restlichen Leistungsabschnitte durch die durchströmende Flüssigkeit von Rückständen befreit. Ein derartiges Bauteil ist kompakt und erlaubt den Einbau einer derart modifizierten Ausschankleitung an einer beliebigen Stelle im Getränkeausschankgerät.

Zudem verhindert oder erschwert ein erfindungsgemässer Injektor - in geeigneten Ausführungsformen -, das durch die Belüftungsöffnung mit der Aussenluft eventuell eintretende Keime in einen Leitungsabschnitt oberhalb des verengten Leitungsquerschnittes, in Richtung Mischkammer, eintreten können. Aus der mikrobiologischen Steriltechnik ist hinreichend bekannt, nicht gasdicht abgeschlossene, belüftete Nährlösungen durch enge, gewundene Wegführung für den Gasaustausch vor Kontamination zu schützen.

Eine bevorzugte Ausführungsform ist eine höchstens waagerechte Anordnung des den Injektor enthaltenden Abschnitts der Getränkeausschankleitung.

Dadurch ist die Eintrittsöffnung des Injektors für die Flüssigkeit immer höher oder höchstens genau so hoch angeordnet ist wie dessen Austrittsöffnung. Auf diese Weise wird das schwerkraftbedingte Austreten von Flüssigkeitsresten durch die Belüftungsöffnung, vor allem nach erfolgter Ausgabe eines Getränkes, verhindert. Unter ,höher' ist dabei zu verstehen, das in Bezug auf die durch die Schwerkraft definierte Vertikale die Eintrittsöffung weiter vom Erdboden entfernt ist als die Austrittsöffnung, also relativ höher ist. Vorzugsweise sollte die Eintrittsöffnung immer höher liegen als die Austrittsöffnung.

Ein weiterer Gegenstand der Erfindung ist ein im Sinne dieser Erfindung nach dem Prinzip einer Venturi-Düse funktionierender Injektor für Flüssigkeit, der als Bauteil in eine von Flüssigkeit durchströmte Leitung einfügt werden kann; Funktion ist die Belüftung der Leitung ohne Flüssigkeitsaustritt durch die im Injektor vorhandenen Ansaugöffnungen. Der Injektor verfügt über je ein Anschlussmittel an seiner Ein- und Austrittsöffnung. Der die beiden Anschlussöffnungen verbindende Rohrabschnitt des Injektors weist eine zentrale Verengung auf. Der Rohrabschnitt zwischen dem Ende dieser Verengung hat einen Innendurchmesser, der grösser ist als der Innendurchmesser der Verengung, vorzugsweise mindestens doppelt so gross. Der Rohrabschnitt verfügt über mindestens eine Ansaugöffnung. Der Übergang zwischen der zentralen Verengung und dem zur Austrittsöffnung hin gelegenen Abschnitt kann in Form eines sich erweiternden Kanals oder aber beispielsweise in Form einer in den Abschnitt hineinragenden Düse oder Leitung ausgeformt sein. Das Bauteil als ganzes sollte aus korosionsbeständigem Material, also z.B. Edelstahl oder Plastik gefertigt sein. Insbesondere eine Ausführung in Kuststoff im Spritzguss erlaubt eine einfache und kostengünstige Herstellung. Ein derartiges Bauteil ist praktisch wartungsfrei und aufgrund des Fehlens von beweglichen Teilen nicht störanfällig. Als Anschlussmittel sind verschiedeneVorrichtungen möglich, z.B. Gewinde oder einfache Wulste zum Aufschieben von flexiblen Schläuchen.

Ein weiterer Gegenstand der Erfindung ist ein Verfahren zur Entlüftung der Auslaufleitung von Getränkeausschankgeräten. Ein nach dem Prinzip einer Venturi-Düse funktionierender Injektor ist in einen Abschnitt der von Getränkeflüssigkeit durchströmten Auslaufleitung eingesetzt und bewirkt durch Öffnungen die Leitungsbelüftung. Ein Flüssigkeitsaustritt durch die Öffnungen wird verhindert. Die Belüftung sorgt für eine vollständige Entleerung der Auslaufleitung im Zuge der Getränkeausgabe.

Die Erfindung ist im folgenden anhand der Zeichnungen näher erläutert.
- Figur 1: einen Längsschnitt durch den Injektor und
- Figur 2: das Schema einer möglichen Anordnung des Injektors in der Auslaufleitung eines Ausschankgerätes.

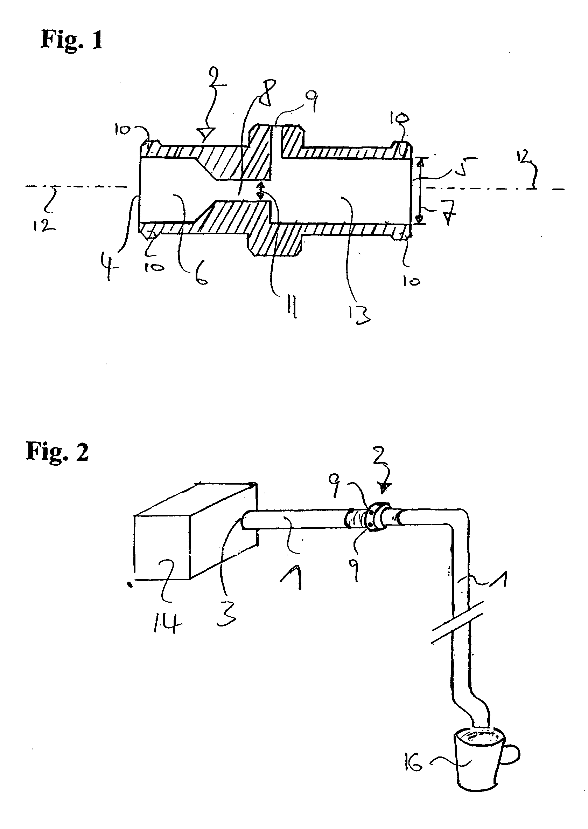

Figur 1 zeigt einen Querschnitt durch einen nach dem Venturi-Prinzip funktionierenden Injektor 2. Der Injektor 2 hat eine in etwa zylindrische Form. Figur 1 zeigt den Injektor 2 im Schnitt entlang der Längsachse 12 in Flussrichtung der durchströmenden Flüssigkeit. Das Bauteil verfügt über eine Eintrittsöffnung 4 und eine Austrittsöffnung 5, die über Anschlussmittel 10 verfügen. Die Anschlussmittel 10 sind in der gezeigten Ausführungsform Wülste zum Aufschieben flexibler Schlauchleitungen. Zwischen der Eintrittsöffnung 4 und Austrittsöffnung 5 besteht ein durchgehender Kanal (6,8,13). Eine zentrale Verengung 8 mit Innendurchmesser 11 geht zur Austrittsöffnung 5 in einen Kanal 13 mit deutlich grösserem Querschnitt bzw. Innendurchmesser 7 über. Dieses verfügt über eine Belüftungsöffnung 9, die das Einströmen von Aussenluft erlaubt. Wenn Flüssigkeit durch den Injektor 2 strömt, entsteht im Bereich des Kanals 13 ein Unterdruck Es wird Luft angesaut und es ist kein Ventil notwendig, um das Austreten von Flüssigkeit aus der Belüftungsöffnung 9 zu verhindern. Wenn der Injektor 2 zum Entlüften einer Leitung verwendet wird, lässt sich damit erreichen, dass im Bereich des Kanals 13 die Leitung permanent belüftet wird.

Es sind viele Ausführungsformen und Arten des Übergangs der Flüssigkeit aus der zentralen Verengung 8 des Injektors 2 in die Austrittsöffnung 5 denkbar, weil im Gegensatz zu herkömmlichen Verwendungen von Venturidüsen, z.B. als Wasserstrahlpumpe oder Zapfhahn, kein starke Sogwirkung erzeugt werden muss. Insbesondere kann bei sehr grossem Durchmesser 7 der Austrittsöffnung 5 und im Vergleich dazu geringer transportierter Flüssigkeitsmenge auch ein sehr geringer Flüssigkeitsdruck (in Fliessrichtung) ausreichen, um die erfindungsgemässe Funktion zu erzielen. Insbesondere kann die zentrale Verengung 8 als ein inneres Rohr in den Kanal 13 hineinragen und in die grössere Austrittsöffnung 5 münden.

Figur 2 zeigt stark vereinfacht die Anordnung des Injektors 2 in einer Auslaufleitung 1 eines Getränkeausschankautomaten. Ein der Entlüftung dienender Injektor 2 ist in einen Leitungsabschnitt der Auslaufleitung 1 kurz hinter einer der Getränkzubereitung dienenden Mischkammer 14 eingefügt. Der Injektor 2 belüftet den zwischen Injektor 2 und dem Ende 15 der Auslaufleitung 1 mit einem darunter angedeutetem Ausschankgefäss, liegenden Abschnitt der Auslaufleitung 1. Infolge der Belüftung fliesst die gesamte ausgehende Flüssigkeitsmenge in das Ausschankgefäss 16.

## Patentansprüche

1. Getränkeausschankgerät, umfassend eine Auslaufleitung (1) mit Belüftungöffnung (9), **dadurch gekennzeichnet, daß** die Auslaufleitung (1) nach einer Mischkammer (14) angeordnet ist, wobei zum Entlüften der Auslaufleitung ein Injektor (2) im ersten Drittel, vorzugsweise am Anfang (3), der Auslaufleitung (1) vorgesehen ist, und wobei ferner die Ansaugöffnung des Injektors (2) als Belüftungsöffnung (9) dient.

2. Getränkeausschankgerät gemäss Anspruch 1, **dadurch gekennzeichnet, dass** eine Eintrittsöffnung (4) des Injektors (2) höchstens genauso hoch, vorzugsweise höher liegt, als eine Austrittsöffnung (5).

3. Verwendung eines Injektors (2) nach dem Venturi-Prinzip zum Entlüften der Auslaufleitung (1) eines Getränkeausschankgeräts gemäß Anspruch 1 oder 2, wobei der Injektor (2) nach einer Mischkammer (14) angeordnet ist.

4. Verwendung eines Injektors (2) gemäss Anspruch 3, **dadurch gekennzeichnet, dass** eine Eintrittsöffnung (4) für Flüssigkeit in Bezug auf die Vertikale mindestens gleich hoch, vorzugsweise höher angeordnet ist, als eine Austrittsöffnung (5).

5. Verfahren zur Entlüftung einer nach einer Mischkammer (14) angeordneten Auslaufleitung (1) von Getränkeausschankgeräten, wobei mittels einer im Bereich einer Belüftungsöffnung (9) in der Auslaufleitung (1) vorgesehenen Verengung (8) die Fliessgeschwindigkeit einer Flüssigkeit erhöht und ein beliebig kleiner Unterdruck, jedenfalls kein Überdruck, erzeugt wird.

## Claims

1. Drinks dispensing device, comprising an outlet conduit (1) with ventilation aperture (9) **characterised in that** the outlet conduit (1) is arranged after a mixing chamber (14) wherein for venting the outlet conduit, an injector (2) is provided in the first third, preferably at the start (3) of the outlet conduit (1), and wherein furthermore the aspiration opening of the injector (2) serves as a ventilation aperture (9).

2. Drinks dispensing device in accordance with claim 1, **characterised in that** an inlet opening (4) of the injector (2) is at most as high as, and preferably lies lower, an outlet opening (5).

3. Use of an injector (2) according to the Venturi principle for venting the outlet conduit (1) of a drinks dispensing device in accordance with claim 1 or 2, wherein the injector (2) is arranged after a mixing chamber (14).

4. Use of an injector 2 in accordance with claim 3, **characterised in that** an inlet opening (4) for liquid is arranged, in relation to the vertical, at least as high as, an preferably higher than, an outlet opening (5).

5. Method for venting an outlet conduit 1 that is arranged after a mixing chamber (14) of drinks dispensing devices in accordance with claim 1 or 2, wherein by means of a narrowing (8) provided in the area of a ventilation aperture (9) in the outlet conduit (1), the flow-rate of a liquid is increased and as low a negative pressure as is desired - at any rate not an over pressure-is created.

## Revendications

1. Distributeur de boisson comprenant une conduite d'écoulement (1) pourvue d'une ouverture d'aération (9), **caractérisé en ce que** la conduite d'écoulement (1) est disposée en aval d'une chambre de mélange (14), un injecteur (2) étant prévu dans le premier tiers, de préférence au début (3), de la conduite d'écoulement (1) pour désaérer celle-ci, et l'ouverture d'aspiration de l'injecteur (2) servant d'ouverture d'aération (9).

2. Distributeur de boisson selon la revendication 1, **caractérisé en ce qu'**une ouverture d'entrée (4) de l'injecteur (2) se trouve au maximum aussi haut, de préférence plus haut, qu'une ouverture de sortie (5).

3. Utilisation d'un injecteur (2) selon le principe du venturi pour désaérer la conduite d'écoulement (1) d'un distributeur de boisson selon la revendication 1 ou 2, selon laquelle l'injecteur (2) est disposé en aval d'une chambre de mélange (14).

4. Utilisation d'un injecteur (2) selon la revendication 3, **caractérisée en ce qu'**une ouverture d'entrée (4) pour du liquide est disposée par rapport à la verticale au moins aussi haut et de préférence plus haut qu'une ouverture de sortie (5).

5. Procédé pour désaérer une conduite d'écoulement (1) de distributeurs de boisson selon la revendication 1 ou 2 disposée en aval d'une chambre de mélange (14), selon lequel grâce à un rétrécissement (8) prévu dans la zone d'une ouverture d'aération (9), dans la conduite d'écoulement (1), on augmente la vitesse d'écoulement d'un liquide et on produit une dépression aussi faible que l'on veut, en tout cas pas une surpression.
